# EUROPÄISCHE PATENTSCHRIFT

(11) **EP 0 734 825 B1**
(45) Veröffentlichungstag und Bekanntmachung des Hinweises auf die Patenterteilung: **23.07.1997**
(21) Anmeldenummer: 96104464.1
(22) Anmeldetag: 21.03.1996
(51) Int. Cl.: B29B 13/06, B29C 47/38, B29C 47/76, C08L 51/04

(54) **Verfahren zur Herstellung von Thermoplasten**
Process for producing thermoplastic resins
Procédé pour la fabrication de matières thermoplastiques

(30) Priorität: 27.03.1995 DE 19511142
(43) Veröffentlichungstag der Anmeldung: 02.10.1996
(73) Patentinhaber: BASF AKTIENGESELLSCHAFT, 67056 Ludwigshafen (DE)
(72) Erfinder: Güntherberg, Norbert, Dr., 67346 Speyer (DE); Hofmann, Jürgen, 67069 Ludwigshafen (DE); Ohlig, Hilmar, 67657 Kaiserslautern (DE); Mailahn, Elmar, 67547 Worms (DE); Bus, Klaus, 67655 Kaiserslautern (DE); Czauderna, Bernhard, Dr., 69493 Hirschberg (DE); Grabowski, Sven, Dr., 67061 Ludwigshafen (DE)

(56) Entgegenhaltungen:
- EP-A- 0 233 371
- EP-A- 0 534 235
- JP-A-60 229 937
- US-A- 4 802 769
- DATABASE WPI Section Ch, Week 8805 Derwent Publications Ltd., London, GB; Class A, AN 88-032036 (05) XP002005287 & JP-A-62 290 748 (DAICEL CHEM. IND. K.K.) , 17.Dezember 1987
- DATABASE WPI Section Ch, Week 9237 Derwent Publications Ltd., London, GB; Class A, AN 92-304947 (37) XP002005288 & JP-A-04 211 430 (MITSUBISHI RAYON CO. LTD.)
- DATABASE WPI Section Ch, Week 8247 Derwent Publications Ltd., London, GB; Class A, AN 82-00866J (47) XP002005289 & JP-A-57 167 303 (TOSHIBA MACH. K.K.) , 15.Oktober 1982
- DATABASE WPI Section Ch, Week 9221 Derwent Publications Ltd., London, GB; Class A, AN 92-169472 (21) XP002005290 & JP-A-04 008 754 (DENKI KAGAKU KOGYO) , 13.Januar 1992
- DATABASE WPI Section Ch, Week 8925 Derwent Publications Ltd., London, GB; Class A, AN 89-182822 (25) XP002005291 & JP-A-01 121 311 (MITSUBISHI RAYON K.K.) , 15.Mai 1989
- DATABASE WPI Section Ch, Week 8925 Derwent Publications Ltd., London, GB; Class A, AN 89-184014 (25) XP002005292 & JP-A-01 123 853 (MITSUBISHI RAYON K.K.) , 16.Mai 1989
- DATABASE WPI Section Ch, Week 9602 Derwent Publications Ltd., London, GB; Class AVX, AN 96-017374 (02) XP002005293 & JP-A-07 292 205 (TORAY IND. INC.) , 7.November 1995
- DATABASE WPI Section Ch, Week 9102 Derwent Publications Ltd., London, GB; Class A, AN 91-012264 (02) XP002005294 & JP-A-02 286 208 (TOSHIBA MACH. K.K.) , 26.November 1990

## Beschreibung

Die vorliegende Erfindung betrifft ein neues Verfahren zur Herstellung von schlagzäh modifizierten Thermoplasten durch mechanische Entwässerung einer wasserfeuchten, bis zu 60 Gew.-% Restwasser enthaltenden Elastomerkomponente A und das Vermischen der entwässerten Elastomerkomponente A' mit einem thermoplastischen Polymeren B in einer Schneckenmaschine.

Außerdem betrifft die Erfindung spezielle Ausführungsformen des genannten Verfahrens, auch solche unter Verwendung bestimmter Komponenten A und B.

Als Elastomerkomponenten für die Schlagzähmodifizierung von thermoplastischen oder anderen Kunststoffen werden häufig partikelförmige Kautschuke verwendet, die gepfropft oder ungepfropft sein können. Solche Kautschuke werden üblicherweise in wäßrigen Systemen hergestellt, beispielsweise durch Emulsions- oder Suspensionspolymerisation. Die bei der Suspensionspolymerisation entstandenen bzw. bei der Emulsionspolymerisation durch Zugabe eines koagulierenden Fällmittels ausgefällten Partikel werden in der Regel mit Wasser gewaschen und durch ein geeignetes Entwässerungsverfahren weiter entwässert. Hierzu geeignete Verfahren sind beispielsweise die thermische Trocknung mittels eines Strom- oder Wirbelbetttrockners, eine partielle Sprühtrocknung, sowie mechanische Verfahren wie (Vacuum-)filtration, Dekantieren und Zentrifugieren. Man erhält in jedem Falle teilentwässerte Produkte.

Häufig verwendete Pfropfkautschuke sind beispielsweise mit einem Styrol-Acrylnitril-Copolymeren (SAN) gepfropftes Polybutadien und mit einem solchen Copolymeren gepfropftes Poly-n-butylacrylat, oder aus mehreren Pfropfstufen aufgebaute Kautschuke auf Basis von Butadien, Styrol, n-Butylacrylat, Methylmethacrylat und/oder Acrylnitril. Auch Kautschuke für andere Einsatzzwecke werden oft durch Polymerisation in wäßriger Phase erhalten.

Der Restwassergehalt des nach der Teilentwässerung erhaltenen Kautschuks beträgt bis zu 60 Gew.-% und wird üblicherweise durch energieaufwendiges Trocknen entfernt. Der als Pulver anfallende, getrocknete Kautschuk wird schließlich in den als Pulver oder Granulat vorliegenden Thermoplasten unter Aufschmelzen eingearbeitet, wobei das Endprodukt entsteht. Auch sind Verfahren bekannt, in denen Kautschuke und Thermoplaste getrennt in wäßrigen Systemen hergestellt, und nach Vereinigung der Emulsionen bzw. Suspensionen gemeinsam gefällt, getrocknet und dann unter Aufschmelzen verarbeitet werden. Das Kautschukpulver neigt während des Trocknens und der Einarbeitung in den Thermoplasten wegen des Feinstaubanteils zur Selbstentzündung.

Nach einem in DE-A-20 37 784 beschriebenen Vorschlag kann man teilentwässerten Pfropfkautschuk in eine SAN-Schmelze unter Verdampfen des Wassers eintragen und einen diesen Pfropfkautschuk enthaltenden Thermoplasten erhalten. Dieses Verfahren erfordert einen relativ hohen Aufwand an elektrischer Energie.

Die EP-A 534 235 lehrt ein Verfahren zur Herstellung von schlagzäh modifizierten Thermoplasten durch Einarbeitung von mechanisch teilweise entwässertem Kautschuk in einen Thermoplasten oberhalb des Erweichungspunktes des Thermoplasten, wobei die Einarbeitung in einem Hauptextruder geschieht und die Teilentwässerung des Kautschuks in einem seitlich am Hauptextruder angebrachten sog. Seitenextruder vorgenommen wird. Das im Kautschuk verbliebene Restwasser wird während der Einarbeitung durch vor und nach der Einmischstelle befindliche Entgasungsöffnungen als Dampf entfernt.

Nachteilig an diesem Verfahren ist die Notwendigkeit, zur Herstellung des schlagzähen Thermoplasten zwei Extruder betreiben zu müssen. Außerdem ist die Entwässerung des Kautschuks im Seitenextruder nicht vollständig, so daß eine große Menge Wasser im Hauptextruder verdampft werden muß.

Die US-Patentschrift 5 151 026 beschreibt einen Extruder, in dem zerkleinerte und gewaschene Kunststoffabfälle, deren Wasseranteil bis zu 50 Gew.-% beträgt, entwässert werden. Zu diesem Zweck befinden sich in der Extruderschnecke, die ansonsten wie üblich ein Rechtsgewinde aufweist, kurze Abschnitte mit einem Linksgewinde. Die aus dieser US-Schrift hervorgegangene Teilanmeldung US 5 232 649 beschreibt das entsprechende Verfahren.

Die japanische Schrift JP 22 86 208 lehrt einen Zweischneckenextruder für die Entwässerung thermoplastischer Formmassen, dessen Rechtsgewinde-Schnecken jeweils zwei Linksgewinde-Abschnitte aufweisen. Das Wasser tritt flüssig durch sog. Seihergehäuse - siebartige Einsätze im Extrudergehäuse - und als Dampf durch Entgasungsöffnungen aus. Die Seihergehäuse neigen allerdings zu Verstopfungen durch austretendes Polymermaterial, wie es beispielsweise in der DT 15 79 106 für die Entwässerung von Synthesekautschuk beschrieben ist. Die japanische Schrift JP 1-202 406 beschreibt ebenfalls ein Verfahren, in dem feuchte, kautschukartige Polymere auf einem Extruder in einem mit Seihergehäusen versehenen Bereich zunächst teilentwässert werden und in dem dann das restliche Wasser in einer atmosphärischen und drei Vacuumentgasungszonen verdampft wird. Dieses Verfahren beinhaltet neben den anfälligen Seihergehäusen eine aufwendige Vacuumtechnik.

Das US-Patent 4 802 769 beschreibt einen Extruder, in dem eine wäßrige Suspension ("slurry") eines Kautschuk-Polymeren, sowie ein Styrol-Acrylnitril-Copolymer zu einem Thermoplasten verarbeitet werden. Dabei tritt das Wasser durch Seihergehäuse flüssig und durch eine dreistufige Entgasung als Dampf aus. Als Nachteile sind - neben den verstopfenden Seihergehäusen - zu nennen, daß der mit Seihergehäusen versehene Extruderteil beheizt ist, und daß im Entgasungsteil ein mehrfacher Druckaufbau durch Stauelemente erfolgt, wodurch das Polymermaterial thermisch und mechanisch stark beansprucht wird.

Der Erfindung lag die Aufgabe zugrunde, ein Verfahren bereitzustellen, welches die geschilderten Nachteile nicht aufweist. Insbesondere sollte ein Verfahren geschaffen werden, das die Herstellung eines schlagzähen Thermoplasten aus einer wasserfeuchten Elastomerkomponente und einem thermoplastischen, spröden Polymeren auf technisch einfache Weise, möglichst in einem Verfahrensschritt, ermöglicht.

Diese Aufgabe wird erfindungsgemäß mit dem Verfahren nach Anspruch 1 gelöst.

Besondere Ausführungsformen des Verfahrens hinsichtlich der Ausgestaltung des Extruders und der verwendeten Komponenten A und B sind in den abhängigen Ansprüchen aufgeführt.

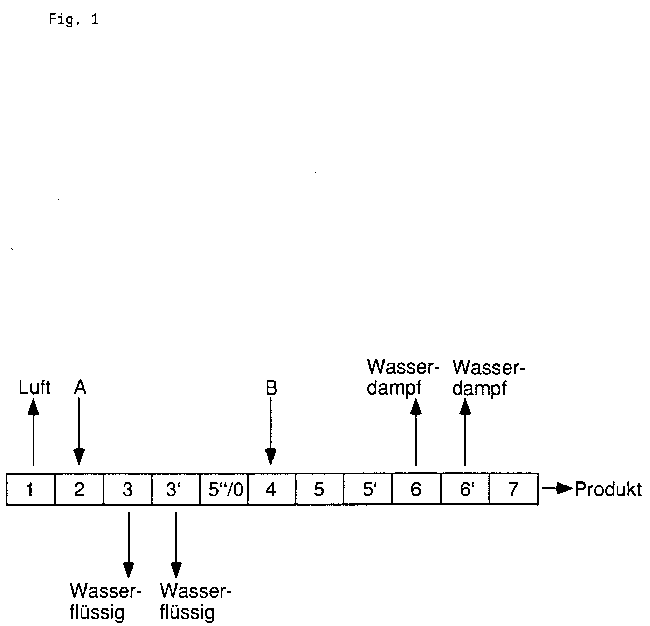

Nachfolgend seien das Verfahrensprinzip und die bevorzugten Ausführungsformen des Verfahrens beschrieben, wobei die als Abschnitte bzw. Zonen bezeichneten Bestandteile des Extruders nicht notwendigerweise identisch sind mit den einzelnen Bauteilen wie Gehäuseteilen, Schneckensegmenten, aus denen der Extruder montiert ist. Ein Abschnitt bzw. eine Zone besteht in der Regel aus mehreren Bauteilen. Die bei den Abschnitten bzw. Zonen genannten Ziffern beziehen sich auf Fig. 1.

Die wasserfeuchte, bis zu 60 Gew.-% Restwasser enthaltende Elastomerkomponente A, beispielsweise ein durch Ausfällen eines durch Emulsionspolymerisation gewonnener und auf bis zu 60 Gew.-% Restwassergehalt, teilentwässerter Pfropfkautschuk - wobei die Teilentwässerung z.B. durch thermische Trocknung, Dekantieren, Zentrifugieren oder Filtrieren erfolgen kann -, wird dem Dosierabschnitt 2 des Extruders zugeführt, wobei der Dosierabschnitt üblicherweise aus einer automatisch arbeitenden Dosiereinrichtung und der eigentlichen Dosieröffnung besteht. Die Dosiereinrichtung ist beispielsweise als Förderschnecke ausgebildet, die das Fördergut in die Dosieröffnung fördert oder drückt. Mittels einer geeigneten Schneckengeometrie im Dosierabschnitt wird erreicht, daß die Komponente A eingezogen und entlüftet wird. Wahlweise kann eingeschlossene Luft auch durch eine im Dosierabschnitt befindliche Entlüftungsöffnung entweichen.

In einer anderen Ausführungsform enthält der Extruder einen Entlüftungsabschnitt 1, der sich stromaufwärts entgegen der Förderrichtung des Extruders befindet und typischerweise eine oder mehrere Entlüftungsöffnungen aufweist.

Die im Dosierabschnitt und - sofern vorhanden - im Entlüftungsabschnitt verwendeten Schneckenelemente sind in der Regel als übliche Förderschnecken ausgebildet. Übliche Förderschnecken sind beispielsweise Elemente mit "Erdmenger"-Profil (vollständig selbstreinigend), Schubkantenelemente oder Elemente mit Rechteckprofil oder Trapezprofil, oder Kombinationen dieser Elemente, wobei die Elemente in den genannten Abschnitten gleich oder verschieden sein können.

Die wasserfeuchte Elastomerkomponente wird stromabwärts in den ersten Abquetschabschnitt gefördert.

Im ersten Abquetschabschnitt 3 wird ein erheblicher Teil des in der Elastomerkomponente enthaltenen Restwassers mechanisch entfernt. Das Material wird gegen ein als Hindernis wirkendes Stauelement gefördert, welches sich in der Regel am Ende des Abquetschabschnitts befindet. Hierdurch wird ein Druck aufgebaut ("Stauzone"), der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen.

Als mögliche Stauelemente können alle handelsüblichen, dem Druckaufbau dienenden Verfahrenselemente dienen. Beispielhaft seien genannt:
- überschobene fördernde Schneckenelemente,
- Schneckenelemente mit Steigung entgegen der Förderrichtung,
- Knetblöcke mit nichtfördernden Knetscheiben in unterschiedlicher Breite,
- Knetblöcke mit rückfördernder Steigung,
- Knetblöcke mit fördernder Steigung,
- Zylinderscheiben, Exzenterscheiben und daraus konfigurierte Blöcke,
- neutrale "Stauscheiben" (Drosselscheiben)
- mechanisch verstellbare Drosseln (Schiebegehäuse, Radialdrosseln, Zentraldrosseln).

Dabei kann jeweils eines der oben genannten Elemente zum Einsatz kommen oder es können auch zwei oder mehrere der Stauelemente miteinander kombiniert werden. Gleichfalls kann die Stauwirkung durch die Art und Länge der einzelnen Stauelemente bzw. der Stauzone dem jeweiligen Elastomeren angepaßt werden.

Bevorzugt ist der Abquetschabschnitt 3 des Extruders aufgebaut aus einem oder mehreren Schneckenelement(en) mit einer Steigung entgegen der Förderrichtung und/oder aus Knetblöcken.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Das im Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck oder Überdruck stehenden Entwässerungsöffnungen versehen. Sie befinden sich bevorzugt etwa in der Mitte des Abquetschabschnittes und in der Regel an der Oberseite des Extruders. Weiterhin sind die Entwässerungsöffnungen bevorzugt mit einer Vorrichtung versehen, die das Austreten des geförderten, unter Druck stehenden Elastomeren A verhindern. Besonders bevorzugt werden dazu sog. Rückhalteschnecken verwendet.

Der Extruder ist im Dosierabschnitt und im Abquetschabschnitt nicht beheizt.

Die Temperatur des austretenden Wassers beträgt im allgemeinen 20 bis 50°C und bevorzugt 25 bis 40°C, gemessen an der Austrittsöffnung.

Im ersten Abquetschabschnitt werden, abhängig von der Elastomerkomponente und dem anfangs vorhandenen Restwassergehalt, üblicherweise 5 bis 90, bevorzugt 5 bis 80 Gew.-% des anfänglich enthaltenen Restwassers entfernt.

Ist die Elastomerkomponente ein partikelförmiger Kautschuk, so liegt er nach Passieren der ersten Stauzone in der Regel ganz überwiegend pulverförmig vor.

Die partiell entwässerte Elastomerkomponente A wird über die Stauzonen hinweggefördert und gelangt in den nächsten Extruderabschnitt.

In einer bevorzugten Ausführungsform folgt auf den soeben beschriebenen ersten Abquetschabschnitt 3 ein zweiter unbeheizter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3.

Im zweiten Abquetschabschnitt wird die Elastomerkomponente weiter entwässert, wobei nochmals bis zu 80, bevorzugt 5 bis 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Das in diesem Abschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, daß der Anteil des flüssig austretenden Wassers trotz der hohen Materialtemperatur 70 Gew.-% oder mehr beträgt. Hierzu werden die Geometrien der Extruderschnecken und der Rückhalteschnecken derart gestaltet, daß durch Druckaufbau im Austrittsbereich das Wasser überwiegend flüssig bleibt.

In der Regel liegt die Wassertemperatur an der Austrittsöffnung bei 40 bis 130, bevorzugt bei 50 bis 99°C.

In einer besonderen Ausführungsform wird in mindestens einem der Abquetschabschnitte mindestens eine zugehörige Entwässerungsöffnung unter Überdruck betrieben. Bevorzugt werden die Entwässerungsöffnungen des zweiten Abquetschabschnittes 3' und diejenigen der nachfolgenden Abquetschabschnitte - so vorhanden - unter Überdruck betrieben. Üblicherweise wird ein Absolutdruck von bis zu 20 bar eingestellt. Der äußere Druck kann beispielsweise durch einen speziellen Entgasungsdom, versehen mit Wasserableitung und -ausschleusung und Druckhalteventil, oder eine dichtkämmende gegenläufige Rückhalteschnecke erzeugt werden.

Die teilentwässerte Elastomerkomponente kann am Ende des zweiten Abquetschabschnittes 3' bereits in größerem Umfange angeschmolzen oder aufgeschmolzen sein und in Form größerer zusammengeschmolzener Agglomerate vorliegen.

In einer bevorzugten Ausführungsform ist der Extruder im Dosierabschnitt und in den Abquetschabschnitten nicht beheizt.

Der Extruder kann hinter dem zweiten Abquetschabschnitt 3' weitere unbeheizte Abquetschabschnitte enthalten, insbesondere dann, wenn der anfängliche Restwassergehalt der Elastomerkomponente A hoch ist.

Nach Passieren des letzten Abquetschabschnittes ist die Elastomerkomponente vom Großteil des Restwassers befreit (Komponente A') und gelangt in einen Abschnitt 5'', der mit Durchmischungs-, Knet- und/oder anderen Plastifizierungselementen versehen ist ("Plastifizierungsabschnitt").

Die Plastifizierungselemente bewirken ein Aufschmelzen und Homogenisieren der entwässerten Elastomerkomponente A', wobei die zur Plastifizierung erforderliche Wärmeenergie überwiegend durch Friktion der Polymermischung an den Plastifizierungselementen eingebracht wird.

Als Plastifizierungselemente kommen die dem Fachmann geläufigen und teilweise handelsüblichen Bauteile in Betracht, beispielsweise Schneckenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Die Auswahl der Plastifizierungselemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann, falls erforderlich, nach dem Plastifizierungsabschnitt 5'' einen oder mehrere weitere Plastifizierungsabschnitte 5' enthalten.

Die im Plastifizierungsabschnitt 5'' aufgeschmolzene Elastomerkomponente A' gelangt in einen Abschnitt 4, in dem sich eine oder mehrere Zufuhröffnungen für das thermoplastische Polymere B befinden, das in Form seiner Schmelze zugeführt wird. Enthält der Abschnitt mehrere Zufuhröffnungen, so können diese z.B. hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann mittels eines Extruders, bevorzugt jedoch mittels technisch einfacher Fördereinrichtungen wie Schmelzepumpen oder Dosierschnecken erfolgen.

Im Bereich des Abschnittes 4, in dem die Schmelze des thermoplastischen Polymeren B zugeführt wird, ist die Schnecke zweckmäßigerweise als Förderschnecke ausgebildet, welche in der Regel nur neutral fördernde Schneckenelemente enthält und die Mischung aus Elastomerkomponente A und der Schmelze des Thermoplasten B nur in geringem Ausmaß zu homogenisieren vermag.

An den die Thermoplastschmelze B zuführenden Abschnitt 4 schließt sich ein (weiterer) Plastifizierungsabschnitt 5 an.

Für den weiteren Plastifizierungsabschnitt 5 und - falls vorhanden - 5' gelten die Ausführungen zum ersten Plastifizierungsabschnitt 5'' entsprechend.

Die Schmelze des thermoplastischen Polymeren B wird demnach in Abschnitt 4 in eine viskose "Schmelze" der Elastomerkomponente A' eingebracht, welch letztere im vorangehenden Plastifizierungsabschnitt 5'' bereitet wurde. Der der Zumischung von Schmelze B nachfolgende Plastifizierungsabschnitt 5 dient bevorzugt der Homogenisierung des Gemisches der beiden bereits im plastischen Zustand vorliegenden Komponenten.

In einer anderen Ausführungsform wird die Schmelze der thermoplastischen Polymeren B dem Extruder direkt in den Plastifizierungsabschnitt 5, z.B. an dessen Anfang, zugeführt. Bei dieser Ausführungsform fällt demnach der Abschnitt der Thermoplastzufuhr 4 mit dem Anfang des Plastifizierungsabschnittes 5 zusammen.

Welche der beschriebenen Varianten der Zufuhr von Schmelze B, nämlich
- in einen fördernden Abschnitt zwischen den zwei Plastifizierungsabschnitten 5'' und 5,
- direkt in den Plastifizierungsabschnitt,
gewählt wird, hängt von der physikalischen und chemischen Eigenschaften der zu vermischenden Komponenten ab. Nur beispielhaft seien die Viskositäten der Schmelzen von Elastomerkomponente A' und thermoplastischem Polymeren B, die Erweichungstemperaturen der Komponenten, ihre thermische Belastbarkeit bzw. Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B, und, im Falle eines partikelförmigen Kautschuks als Elastomerkomponente A, dessen Teilchengröße und Teilchengrößenverteilung genannt.

Der erste Plastifizierungsabschnitt 5'' kann durch einen Abschnitt 0 (null) ersetzt sein, der eine neutral fördernde Förderschnecke (also keine speziellen Plastifizierungselemente) enthält. Dies kann insbesondere dann sinnvoll sein, wenn die von der Förderschnecke eingebrachte Wärmeenergie zum Schmelzen der Elastomerkomponente A bereits ausreicht.

Dem letzten Plastifizierungsabschnitt folgen ein oder mehrere Entgasungsabschnitte 6 bzw. 6', die jeweils mit einer oder mehreren Entgasungsöffnungen versehen sind. In den Entgasungsabschnitten wird das verbliebene Restwasser, welches in den Abquetschabschnitten noch nicht mechanisch entfernt wurde, teilweise oder vollständig entfernt. Wegen der üblicherweise über 100°C liegenden Temperaturen der Polymerschmelze tritt das Wasser zumeist vollständig als Dampf aus. Die zur Verdampfung des Wassers notwendige Energie wurde bereits in den Plastifizierungsabschnitten eingebracht.

Die Entgasungsöffnungen befinden sich bevorzugt an der Oberseite des Extruders. Jedoch sind auch andere Anordnungen möglich, siehe hierzu die Ausführungen zur Position der Zufuhröffnungen für die Schmelze des thermoplastischen Polymeren B, die sinngemäß auch für die Entgasungsöffnungen gelten.

Die Entgasungsöffnungen können unter Normaldruck, unter Vakuum oder unter Überdruck betrieben werden, wobei alle Entgasungsöffnungen gleichen oder unterschiedlichen Druck aufweisen können. Im Falle eines Vakuums beträgt der Absolutdruck üblicherweise 20 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck zu betreiben.

Die Anzahl der Entgasungsabschnitte sowie die Zahl, Anordnung und Dimensionierung der Entgasungsöffnungen richtet sich nach dem Wassergehalt des in die Entgasungsabschnitte eintretenden Polymeren und dem gewünschten Wasseranteil im Endprodukt. In einer bevorzugten Ausführungsform wird ein Extruder mit zwei Entgasungsabschnitten verwendet.

Die Entgasungsöffnungen der Entgasungsabschnitte können mit Vorrichtungen, z.B. Rückhalteschnecken, versehen sein, die ein Austreten des geförderten Materials durch die Öffnungen aus dem Extruder verhindern. In einer bevorzugten Ausführungsform sind solche Vorrichtungen jedoch nicht bzw. nicht für alle Entgasungsöffnungen erforderlich.

Nachdem eine erhebliche Menge des in der Elastomerkomponente A enthaltenen Restwassers bereits in den Abquetschabschnitten 3 und 3' entfernt wurde, werden in allen Entgasungsabschnitten 6 und 6' zusammengenommen nur etwa 10 bis 60, bevorzugt 20 bis 50 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet, wie sie bereits für den Dosier- und Entlüftungsabschnitt beschrieben wurden.

Der letzte Abschnitt des Extruders ist die Austragzone 7. Sie besteht aus einer Förderschnecke und einem geschlossenen Gehäuseteil, das mit einer definierten Austragsöffnung abgeschlossen ist. Bevorzugt wird als Austragsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird von rotierenden Messern abgetrennt und in Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das entstehende Granulat wird danach weiter gekühlt oder kühlt bei der Weiterverarbeitung ab, sofern dies notwendig ist. Es ist auch die Weiterverarbeitung im heißen Zustand oder die Direktextrusion von Platten, Folien, Rohren und Profilen denkbar.

In einer weiteren besonderen Ausführungsform ist die Austragszone 7 mit einer Vorrichtung zur Filtration der aus dem Extruder austretenden Schmelze versehen, die sich vor dem Düsenkopf befindet. Derartige Vorrichtungen zur kontinuierlichen Schmelzefiltration sind dem Fachmann bekannt und handelsüblich. Man kann, falls notwendig, zwischen Austragszone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende Schmelze wird granuliert bzw. auf andere Art weiterverarbeitet, wie es bereits beschrieben wurde.

Der Wassergehalt des ausgetragenen Polymeren (die "Strangfeuchte") beträgt in der Regel 0,05 bis 1,2 Gew.-%, bezogen auf dieses Polymere. Die Temperatur der aus der Austragsöffnung austretenden Polymerschmelze beträgt in der Regel 180 bis 350°C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sind.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines Bereiches von 50 bis 600 min⁻¹ variieren kann.

Der Extruder wird derart ausgestaltet und betrieben, daß sich bei einer Schneckendrehzahl von 50 bis 600 min⁻¹ mittlere Schergeschwindigkeiten von 20 bis 240 s⁻¹ einstellen. Bevorzugt wird der Extruder derart ausgestaltet und betrieben, daß sich bei einer Schneckendrehzahl von 100 bis 350 min⁻¹ mittlere Schergeschwindigkeiten von 80 bis 120 s⁻¹ einstellen.

Unter der mittleren Schergeschwindigkeit versteht man das Verhältnis von Umfangsgeschwindigkeit der rotierenden Schnecke zur mittleren Gangtiefe der Schnecke. Ihre Berechnung ist demnach dem Fachmann geläufig.

Als Elastomerkomponente A kann jedes Polymere eingesetzt werden, das elastomere Eigenschaften hat und einem Extruder zugeführt werden kann. Insbesondere werden, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 60, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Styrol, Alkylstyrol, C₁- bis C₁₀-Alkylester der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden. Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril.

In dieser Ausführungsform werden als thermoplastische Polymere B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Weiterhin können als thermoplastische Polymere B auch Polycarbonat, Polybutylenterephthalat, Polyoxymethylen, Polymethylmethacrylat, Polyphenylensulfid, Polysulfone, Polyethersulfone und Polyamide und Mischungen dieser Thermoplasten - sowohl untereinander als auch mit den im vorletzten Absatz genannten Polymeren B - eingesetzt werden.

Ebenso kann man als Komponente B Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol oder kernalkylierte Styrole ersetzt sein.

Von den zuletzt genannten Polymeren B sind solche auf Basis von α-Methylstyrol/Acrylnitril, Styrol/Maleinsäureanhydrid, Styrol/Methylmethacrylat und Copolymere mit imidiertem Maleinsäureanhydrid bevorzugt.

Bekannte Beispiele für die Elastomerkomponente A sind Polymerisate von konjugierten Dienen wie Butadien, mit einer äußeren Pfropfhülle auf Basis einer vinylaromatischen Verbindung, z.B. SAN-Copolymeren. Gleichfalls bekannt sind Pfropfkautschuke auf Basis von vernetzten Polymerisaten aus C₁- bis C₁₀-Alkylestern der Acrylsäure wie n-Butylacrylat und/oder Ethylhexylacrylat, gepfropft mit Polymeren auf der Grundlage vinylaromatischer Verbindungen wie SAN-Copolymeren. Gebräuchlich sind auch Pfropfkautschuke, die im wesentlichen ein Copolymerisat aus konjugierten Dienen und C₁- bis C₁₀-Alkylacrylaten, beispielsweise ein Butadien-n-Butylacrylat-Copolymerisat, und eine äußere Pfropfstufe aus SAN-Copolymer enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke in der Regel Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt und nach den üblichen Verfahren aufgearbeitet wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 ff beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 60 Gew.-% Restwassergehalt auf Basis von Polydienen und/oder Polyalkylacrylaten sowie SAN und/oder PMMA eingesetzt, die aus mehr als zwei Pfropfstufen aufgebaut sind. Beispiele für solche vielstufigen Pfropfpartikel sind Teilchen, die als Kern ein Polydien und/oder Polyalkylacrylat, als erste Hülle ein SAN-Polymeres und als zweite Hülle ein anderes SAN-Polymeres mit einem veränderten Gewichtsverhältnis Styrol : Acrylnitril aufgebaut sind, oder auch Teilchen aus einem Kern aus Polystyrol oder SAN-Polymerisat, einer ersten Hülle aus Polydien und/oder Polyalkylacrylat und einer zweiten Hülle aus einem Polymeren, welches Styrol, Acrylnitril, oder Methylmethacrylat alleine oder in Mischung enthält. Weitere Beispiele sind Pfropfkautschuke aus einem Polydienkern, einer oder mehreren Polyalkylacrylathüllen und einer oder mehreren Hüllen aus einem Polymeren, welches Styrol, Acrylnitril, oder Methylmethacrylat alleine oder in Mischung enthält, oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder andere dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 µm. Handelt es sich um die allgemein bekannten Pfropfkautschuke kleinen Durchmessers, so beträgt er bevorzugt 0,08 bis 1,5 und besonders bevorzugt 0,1 bis 0,8 µm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 µm. Derartige Pfropfkautschuke großen Durchmessers lehrt beispielsweise die DE-OS 44 43 886.

Bevorzugte Komponente B sind auch in dieser Ausführungsform die genannten SAN-Copolymere, Polystyrol und/oder PMMA.

Neben der Elastomerkomponente A und dem thermoplastischen Polymeren B können die nach dem erfindungsgemäßen Verfahren hergestellten Formmassen noch weitere Komponenten, insbesondere Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten.

Diese weiteren Komponenten können beispielsweise direkt durch Zufuhröffnungen oder zusammen mit den Komponenten A und B in den Extruder eingeführt werden.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil des erfindungsgemäßen Verfahrens ist, daß ein erheblicher Teil des Restwassers, welches in der teilentwässerten Elastomerkomponente A enthalten ist, bereits in den Abquetschzonen mechanisch entfernt wird, weshalb in den nachfolgenden Extruderabschnitten weniger thermische Energie zur Verdampfung des verbliebenen Wassers angewendet werden muß. Es resultiert eine deutliche Energieeinsparung.

Ein weiterer Vorteil des erfindungsgemäßen Verfahrens liegt darin, daß der Extruder bei niedrigeren Temperaturen betrieben werden kann als beispielsweise gemäß dem in der EP-A 534 235 beschriebenen Verfahren, so daß die Elastomerkomponente A und das aus den Bestandteilen A und B - und gegebenenfalls den weiteren Komponenten - bestehende Polymere schonender verarbeitet wird.

Durch das Einarbeiten einer teilentwässerten Elastomerkomponente A in die Schmelze eines thermoplastischen Polymeren B lassen sich, Verträglichkeit oder zumindest Teilverträglichkeit der Elastomerkomponente mit dem thermoplastischen Polymeren und ausreichende thermische Beständigkeit vorausgesetzt, kautschukmodifizierte thermoplastische Formmassen verschiedenster Art herstellen.

Gegenüber den aus dem Stand der Technik bekannten Verfahren hat das erfindungsgemäße Verfahren weiterhin den Vorteil, daß keine verstopfungsanfälligen Seihergehäuse verwendet werden, und daß im Entwässerungsteil des Extruders ohne Fremdheizung gearbeitet wird, was die thermische Belastung des Polymeren vermindert.

Die erfindungsgemäße Anordnung des Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sog. "Schüssen", verfügbar und ermöglichen eine genaue Anpassung des Extruders an das spezielle Konfektionierungsproblem.

### Beispiele

### a) Extruder

Es wird ein Zweischneckenextruder des Typs ZSK 40 von Fa. Werner und Pfleiderer, Stuttgart, eingesetzt, der aus 14 Schüssen aufgebaut ist. Ihre Anordnung ist stromab wie folgt (in Klammern ist die in der Beschreibung verwendete Bezeichnung der Extruderabschnitte angegeben):
- Schuß 1:: Länge 3 D, unbeheizt, mit oberliegender Dosieröffnung, die mit einer Dosiereinrichtung ESB 45 von Fa. Werner und Pfleiderer versehen ist, und zusätzlicher Entlüftungsöffnung (Dosierabschnitt 2 für Elastomerkomponente A).
- Schuß 2:: Länge 3 D, unbeheizt, mit obenliegender Entwässerungsöffnung, die mit einer Rücknalteschnecke versehen ist (erster Abquetschabschnitt 3, vorderer Teil).
- Schuß 3:: Länge 3 D, unbeheizt, ohne Öffnungen, enthält Stauelemente (erster Abquetschabschnitt 3, hinterer Teil).
- Schuß 4:: Länge 3 D, unbeheizt, ohne Öffnungen, mit fördernder Schnecke (zweiter Abquetschabschnitt 3', vorderer Teil).
- Schuß 5:: Länge 3 D, unbeheizt, mit obenliegender Entwässerungsöffnung, die mit einer Rückhalteschnecke versehen ist (zweiter Abquetschabschnitt 3', mittlerer Teil).
- Schuß 6:: Länge 3 D, unbeheizt, ohne Öffnungen, enthält Stauelemente sowie einen Schneckenabschnitt mit Knetblöcken (zweiter Abquetschabschnitt 3', hinterer Teil).
- Schuß 7:: Länge 3 D, beheizt auf 250°C, ohne Öffnungen, mit neutral fördernder Schnecke (Abschnitt 0).
- Schuß 8:: Länge 3 D, beheizt auf 250°C, mit seitlicher Öffnung, durch die mittels einer Rohrleitung via Schmelzepumpe die Polymerschmelze eingebracht wird (Abschnitt 4, in dem die Schmelze des thermoplastischen Polymeren B zugeführt wird) und einen Schneckenabschnitt, der Knetblöcke enthält (erster Plastifizierungsabschnitt 5).
- Schuß 9:: Länge 3 D, beheizt auf 250°C, ohne Öffnungen, mit einem Schneckenabschnitt, der Knetblöcke enthält (zweiter Plastifizierungsabschnitt 5').
- Schuß 10:: Länge 3 D, beheizt auf 250°C, mit obenliegender, mit einer Rückhalteschnecke versehenen Entgasungsöffnung und Förderschnecke, wird unter Normaldruck betrieben (erster Entgasungsabschnitt 6).
- Schuß 11:: Länge 3 D, beheizt auf 250°C, ohne Öffnungen, mit Förderschnecke (zweiter Entgasungsabschnitt 6', vorderer Teil).
- Schuß 12:: Länge 3 D, beheizt auf 250°C, mit obenliegender Entgasungsöffnung und Förderschnecke, wird unter Normaldruck betrieben (zweiter Entgasungsabschnitt 6', hinterer Teil).
- Schuß 13:: Länge 3 D, beheizt auf 250°C, ohne Öffnungen und mit Förderschnecke (Austragzone 7, vorderer Teil).
- Abschluß:: Düsenleiste mit zylindrischen Bohrungen (Austragszone 7, hinterer Teil).

Der Schneckendurchmesser beträgt D = 40 mm. Die Schnecke ist tiefgeschnitten (große Ganghöhe) und zweigängig ausgeführt. "Schnecke" bezeichnet jeweils die Doppelschnecke, also beide Schnecken.

Bei einer Schneckendrehzahl von 250 min⁻¹ tritt im Extruder eine berechnete mittlere Schergeschwindigkeit von 90 bis 100 s⁻¹ auf.

### b) verwendete Polymerkomponenten

Als Elastomerkomponente A wurden die folgenden Pfropfkautschuke eingesetzt:
- A-1:: Pfropfkautschuk Typ Polybutadien (Kern)/Styrol-Acrylnitril (Schale).
Butadien wurde in Emulsion polymerisiert, der erhaltene Latex agglomeriert, wobei ein Latex mit einer mittleren Teilchengröße d₅₀ von 238 nm entstand, und anschließend mit einem Gemisch von Styrol und Acrylnitril pfropfpolymerisiert. Näheres ist der DE-AS 24 27 960, Sp. 6, Z. 17 bis Sp. 7, Z. 27, zu entnehmen. Das ausgefällte Pfropfpolymerisat wurde abgesaugt, der Restwassergehalt betrug 31 Gew.-%.
- A-2:: Pfropfkautschuk Typ Polybutylacrylat (Kern) /Styrol-Acrylnitril (Schale)
n-Butylacrylat wurde mit Dihydrodicyclopentadienylacrylat als Vernetzer in Emulsion polymerisiert und der erhaltene Latex, dessen mittlere Teilchengröße d₅₀ 230 nm betrug, mit einem Styrol-Acrylnitril-Gemisch pfropfpolymerisiert. Im Einzelnen wurde gemäß der in der DE-AS 12 60 135, Sp. 4, Z. 65 bis Sp. 5, Z. 18, angegebenen Vorschrift verfahren. Das ausgefällte Pfropfprodukt wurde im Luftstrom getrocknet, der Restwassergehalt betrug 33 Gew.-%.

Als thermoplastisches Polymeres B wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Verlag München 1969, Seite 122 bis 124, beschrieben ist. Es wurden zwei Polymere B-1 bzw. B-2 mit verschiedenen Polymerisationsgraden hergestellt. Die Viskositätszahl VZ (ermittelt nach DIN 53 726 bei 25°C, 0,5 Gew.-% in Dimethylformamid) betrug 60 ml/g für das Polymere B-1 und 90 ml/g für das Polymere B-2.

Das SAN-Copolymere wurde dem Extruder als Schmelze zugeführt.

Aus den Komponenten A-1 und B entstehen Formmassen, die allgemein als ABS (Acrylnitril/Butadien/Styrol) bekannt sind. Die aus den Komponenten A-2 und B erhaltenen Produkte sind als ASA-Formmassen (Arcylnitril/Styrol/Acrylester) geläufig.

### c) Messungen

Einer der Pfropfkautschuke A und eines der Polymere B wurden dem Extruder zugeführt. Gemessen wurden der Wasseraustrag und der Kautschukaustrag in der ersten und zweiten Abquetschzone sowie die Strangfeuchte des austretenden Endproduktes. Diese Messungen wurden gravimetrisch vorgenommen.

Die als Dampf ausgetretene Wassermenge wurde durch Differenzbildung des anfänglichen Restwassergehaltes und der Summe des ausgetretenen flüssigen Wassers berechnet.

Aus den Austrägen an Wasser, Dampf und Kautschuk in kg/h wurden Prozentanteile berechnet. Die angegebenen %-Werte sind Gew.-% und beziehen sich für Wasser und Dampf auf den Wassergehalt des dem Extruder zugeführten Kautschuks (mit * markierte Zeile), der gleich 100 gesetzt wurde, und für Kautschuk auf den Durchsatz des feuchten Kautschuks (mit ** markierte Zeile), der gleich 100 gesetzt wurde. Die Strangfeuchte ist auf das erhaltene Endprodukt bezogen.

**Tabelle**

| Beispiel | 1 | 2 |
|---|---|---|
| Elastomerkomponente | A-1 | A-2 |
| thermoplastisches Polymeres | B-2 | B-1 |
| Durchsatz Kautschuk [kg/h]** | 47 | 50 |
| Zufuhr Schmelze thermopl. Polymer [kg/h] | 50 | 50 |
| Wassergehalt Kautschuk [Gew.-%]* | 31 | 33 |
| Extruder-Drehzahl [min⁻¹] | 250 | 250 |

| 1. Abquetschabschnitt | | |
|---|---|---|
| Austrag Wasser [kg/h] ¹⁾ | 5,7=39 % | 10,7=65 % |
| Austrag Kautschuk [kg/h] ²⁾ | 0,6=2 % | 0,5=2 % |

| 2. Abquetschabschnitt | | |
|---|---|---|
| Austrag Wasser [kg/h] ¹⁾ | 3,5=24 % | 2,0=12 % |
| Austrag Kautschuk [kg/h] ²⁾ | 0,3=1 % | 0,1=<1 % |

| Entgasungsabschnitte | | |
|---|---|---|
| Dampfaustrag [kg/h] ¹⁾ | 5,2=36 % | 3,7=22 % |
| Strangfeuchte [Gew.-%] | 0,1 | 0,1 |

| | | |
|---|---|---|
| ¹⁾ %-Werte bezogen auf Zeile * = 100 | | |
| ²⁾ %-Werte bezogen auf Zeile ** = 100 | | |

Die Beispiele zeigen, daß 39 bis 65 Gew.-% des anfänglich im teilentwässerten Kautschuk enthaltenen Restwassers bereits im ersten Abquetschabschnitt als flüssiges Wasser entfernt werden. Weitere 12 bis 24 Gew.-% treten im zweiten Abquetschabschnitt flüssig aus, und lediglich 22 bis 36 Gew.-%, also der kleinere Teil des Restwassers, werden in den Entgasungsabschnitten als Dampf ausgetragen.

Der Kautschukaustrag ist mit 2 Gew.-% der Menge feuchten Kautschuks im ersten und maximal 1 Gew.-% im zweiten Abquetschabschnitt gering.

## Patentansprüche

1. Verfahren zur Herstellung von schlagzäh modifizierten Thermoplasten durch mechanische Entwässerung einer wasserfeuchten, bis zu 60 Gew.-% Restwasser enthaltenden Elastomerkomponente A und Vermischen der so erhaltenen entwässerten Elastomerkomponente A' mit einem thermoplastischen Polymeren B in einer Schneckenmaschine, bei dem man die Elastomerkomponente A einem Zweischneckenextruder mit gleichsinnig rotierenden, jeweils zweigängigen Schnecken zuführt, der in Förderrichtung im wesentlichen aus
- einem unbeheizten Dosierabschnitt, in den mittels einer Dosiereinrichtung die Elastomerkomponente A dem Extruder zugeführt wird,
- mindestens einem der Entwässerung dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden,
- mindestens einem mit einer Förderschnecke oder mindestens einem mit Durchmischungs-, Knet- und/oder anderen Plastifizierungselementen versehenen Abschnitt,
- mindestens einem Abschnitt, in dem das thermoplastische Polymere B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone
aufgebaut ist, bei dem das aus den Entwässerungsöffnungen austretende Wasser teilweise oder vollständig in flüssiger Phase vorliegt, und bei dem der Extruder bei einer Schneckendrehzahl von 50 bis 600 min⁻¹ und mittleren Schergeschwindigkeiten von 20 bis 240 s⁻¹ betrieben wird.

2. Verfahren nach Anspruch 1, dadurch gekennzeichnet, daß die Entwässerungsöffnungen mit jeweils einer Rückhalteschnecke versehen sind.

3. Verfahren nach Anspruch 1 und 2, dadurch gekennzeichnet, daß die Austragszone durch einen Düsenkopf abgeschlossen ist.

4. Verfahren nach Anspruch 1 bis 3, dadurch gekennzeichnet, daß der Extruder in der Austragszone beheizt wird.

5. Verfahren nach Anspruch 1 bis 4, dadurch gekennzeichnet, daß der Extruder zwischen dem letzten Abquetschabschnitt und dem Abschnitt, in dem die Schmelze des thermoplastischen Polymeren B zugeführt wird, mindestens einen mit Durchmischungs-, Knet- und/oder anderen Plastifizierungselementen versehenen Abschnitt aufweist.

6. Verfahren nach Anspruch 1 bis 5, dadurch gekennzeichnet, daß der Extruder zwischen dem letzten Abquetschabschnitt und dem ersten Entgasungsabschnitt mindestens eine Zufuhröffnung für die Schmelze des thermoplastischen Polymeren B, sowie mindestens einen dieser Zufuhröffnung nachfolgenden, und gegebenenfalls mindestens einen dieser Zufuhröffnung vorangehenden, mit Durchmischungs-, Knet- und/oder anderen Plastifizierungselementen versehenen Abschnitt, aufweist.

7. Verfahren nach Anspruch 1 bis 6, dadurch gekennzeichnet, daß in mindestens einem der Abquetschabschnitte des Extruders mindestens eine zugehörige Entwässerungsöffnung unter Überdruck betrieben wird.

8. Verfahren nach Anspruch 1 bis 7, dadurch gekennzeichnet, daß als Elastomerkomponente A mindestens ein Pfropfkautschuk mit einem Restwassergehalt von bis zu 60 Gew.-% eingesetzt wird.

9. Verfahren nach Anspruch 1 bis 8, dadurch gekennzeichnet, daß als Elastomerkomponente A ein zwei- oder mehrstufig aufgebauter Pfropfkautschuk, enthaltend eine Grundstufe aus einem oder mehreren der Monomeren Butadien, Styrol, Alkylstyrol, Alkylacrylat, Alkylmethacrylat und geringen Mengen anderer, auch vernetzender Monomerer und eine Pfropfstufe aus Styrol, Alkylstyrol, Acrylnitril, Methylmethacrylat oder Mischungen dieser Monomeren, verwendet wird, und als thermoplastisches Polymeres B ein Styrol-Acrylnitril-Copolymeres, Polystyrol, Polymethylmethacrylat, Polyvinylchlorid oder Mischungen dieser Polymeren, eingesetzt wird.

10. Verfahren nach Anspruch 1 bis 9, dadurch gekennzeichnet, daß als Elastomerkomponente A ein Pfropfkautschuk auf Basis von Polybutadien und/oder Polyalkylacrylat als Grundstufe und einem Copolymeren aus Styrol und Acrylnitril als Pfropfstufe, und als thermoplastisches Polymeres B ein Styrol-Acrylnitril-Copolymeres, eingesetzt wird.

11. Verfahren nach Anspruch 1 bis 10, dadurch gekennzeichnet, daß als Elastomerkomponente A ein zwei- oder mehrstufig aufgebauter Pfropfkautschuk eingesetzt wird, der im wesentlichen aus Polyalkylacrylat und einem Copolymeren aus Styrol und Acrylnitril besteht, und als thermoplastisches Polymeres B ein Styrol-Acrylnitril-Copolymeres, eingesetzt wird.

12. Verfahren nach Anspruch 1 bis 11, dadurch gekennzeichnet, daß der Pfropfkautschuk einen Durchmesser von 0,05 bis 20 µm hat.

## Claims

1. A process for the preparation of toughened thermoplastics by mechanical dewatering of a water-moist elastomer component A containing up to 60% by weight of residual water and mixing of the resulting dewatered elastomer component A' with a thermoplastic polymer B in an extruder, in which the elastomer component A is fed to a twin-screw extruder which has screws rotating in the same direction and each having two flights and which, in the conveying direction, essentially comprises
- an unheated metering section in which the elastomer component A is fed to the extruder by a metering means,
- at least one unheated squeeze section which serves for dewatering and contains at least one retarding element and in each case one associated dewatering orifice, Seiher barrels not being used as dewatering orifices,
- at least one section provided with a conveying screw or at least one section provided with mixing, kneading and/or other plasticating elements,
- at least one section in which the thermoplastic polymer B is introduced into the extruder in the form of a melt,
- at least one section provided with mixing, kneading and/or other plasticating elements,
- at least one devolatilization section which is provided with at least one devolatilization orifice and in which the residual water is removed as steam, and
- a discharge zone,
in which some or all of the water emerging from the dewatering orifices is present in the liquid phase and in which the extruder is operated at a screw speed of from 50 to 600 rpm and average shear rates of from 20 to 240 s⁻¹.

2. A process as claimed in claim 1, wherein the dewatering orifices are each provided with a retaining screw.

3. A process as claimed in claims 1 and 2, wherein the discharge zone is closed by a die head.

4. A process as claimed in any of claims 1 to 3, wherein the extruder is heated in the discharge zone.

5. A process as claimed in any of claims 1 to 4, wherein, between the final squeeze section and the section in which the melt of the thermoplastic polymer B is fed, the extruder has at least one section provided with mixing, kneading and/or other plasticating elements.

6. A process as claimed in any of claims 1 to 5, wherein, between the final squeeze section and the first devolatilization section, the extruder has at least one feed orifice for the melt of the thermoplastic polymer B and at least one section downstream of this feed orifice and provided with mixing, kneading and/or other plasticating elements and, if required, at least one section upstream of this feed orifice and provided with said elements.

7. A process as claimed in any of claims 1 to 6, wherein at least one associated dewatering orifice is operated under superatmospheric pressure in at least one of the squeeze sections of the extruder.

8. A process as claimed in any of claims 1 to 7, wherein at least one graft rubber having a residual water content of up to 60% by weight is used as elastomer component A.

9. A process as claimed in any of claims 1 to 8, wherein a graft rubber composed of two or more stages and containing a base stage comprising one or more of the monomers butadiene, styrene, alkylstyrene, alkyl acrylate, alkyl methacrylate and small amounts of other, including crosslinking, monomers and a graft stage comprising styrene, alkylstyrene, acrylonitrile, methyl methacrylate or a mixture of these monomers is used as elastomer component A, and a styrene-acrylonitrile copolymer, polystyrene, polymethyl methacrylate, poly(vinyl chloride) or a mixture of these polymers is used as thermoplastic polymer B.

10. A process as claimed in any of claims 1 to 9, wherein a graft rubber based on polybutadiene and/or polyalkyl acrylate as the base stage and a copolymer of styrene and acrylonitrile as the graft stage is used as elastomer component A and a styrene/acrylonitrile copolymer is used as thermoplastic polymer B.

11. A process as claimed in any of claims 1 to 10, wherein a graft rubber composed of two or more stages and essentially comprising polyalkyl acrylate and a copolymer of styrene and acrylonitrile is used as elastomer component A, and a styrene/acrylonitrile copolymer is used as thermoplastic polymer B.

12. A process as claimed in any claims 1 to 11, wherein the graft rubber has a diameter of from 0.05 to 20 µm.

## Revendications

1. Procédé pour la préparation de matières thermoplastiques modifiées à résistance élevée aux chocs, par déshydratation mécanique d'un composant élastomère A humidifié avec de l'eau, contenant une teneur en eau résiduelle jusqu'à concurrence de 60% en poids, et par mélange du composant élastomère A' déshydraté ainsi obtenu avec un polymère thermoplastique B dans une extrudeuse à vis sans fin, dans lequel on achemine le composant élastomère A à une extrudeuse à double vis sans fin comprenant des vis sans fin tournant dans le même sens, respectivement à filet double, qui est constituée, dans la direction du transport, essentiellement par
- une section de dosage non chauffée dans laquelle on achemine, au moyen d'un mécanisme de dosage, le composant élastomère A à 'extrudeuse,
- au moins une section de compression non chauffée servant à la déshydratation, qui contient au moins un élément de retenue, ainsi que respectivement au moins une ouverture de déshydratation correspondante, dans laquelle, à titre d'ouvertures de déshydratation, on n'utilise pas de cage filtrante,
- au moins une section munie d'une vis transporteuse sans fin ou au moins une section munie d'un élément de mélange intime, de malaxage et/ou d'autres éléments de plastification,
- au moins une section dans laquelle on introduit le polymère thermoplastique B sous forme de masse fondue dans l'extrudeuse,
- au moins une section munie d'un élément de mélange intime, de malaxage et/ou d'autres éléments de plastification,
- au moins une section de dégazage munie d'au moins une ouverture de dégazage, dans laquelle on élimine l'eau résiduelle sous forme de vapeur, et
- une zone d'évacuation,
dans lequel l'eau qui s'évacue par les ouvertures de déshydratation est présente en partie ou complètement en phase liquide, et dans lequel l'extrudeuse est entraînée à une vitesse de rotation de la vis sans fin de 50 à 600 min-¹ et à des vitesses de cisaillement moyennes de 20 à 240 s⁻¹.

2. Procédé selon la revendication 1, caractérisé en ce que les ouvertures de déshydratation sont munies respectivement d'une vis sans fin de retenue.

3. Procédé selon les revendications 1 et 2, caractérisé en ce que la zone d'évacuation est fermée par une tête de filière.

4. Procédé selon les revendications 1 à 3, caractérisé en ce que l'extrudeuse est chauffée dans la zone d'évacuation.

5. Procédé selon les revendications 1 à 4, caractérisé en ce que l'extrudeuse présente, entre la dernière section de compression et la section dans laquelle on achemine la masse fondue du polymère thermoplastique B, au moins une section munie d'un élément de mélange intime, de malaxage et/ou d'autres éléments de plastification.

6. Procédé selon les revendications 1 à 5, caractérisé en ce que l'extrudeuse présente, entre la dernière section de compression et la première section de dégazage, au moins une ouverture d'alimentation pour la masse fondue du polymère thermoplastique B, ainsi qu'au moins une section faisant suite à cette ouverture d'alimentation, et le cas échéant, au moins une section précédant cette ouverture d'alimentation, munie d'un élément de mélange intime, de malaxage et/ou d'autres éléments de plastification.

7. Procédé selon les revendications 1 à 6, caractérisé en ce que, dans au moins une des sections de compression de l'extrudeuse, au moins une ouverture de déshydratation correspondante est mise en service dans des conditions de surpression.

8. Procédé selon les revendications 1 à 7, caractérisé en ce que, comme composant élastomère A, on met en oeuvre au moins un caoutchouc greffé possédant une teneur en eau résiduelle jusqu'à concurrence de 60% en poids.

9. Procédé selon les revendications 1 à 8, caractérisé en ce que, comme composant élastomère A, on utilise un caoutchouc greffé de composition biphasique ou polyphasique contenant une phase de base constituée par un ou plusieurs monomères choisis parmi le butadiène, le styrène, l'alkylstyrène, l'acrylate d'alkyle, le méthacrylate d'alkyle et des quantités minimes d'autres monomères ayant également un effet de réticulation, ainsi qu'une phase de greffage constituée par du styrène, de l'alkylstyrène, de l'acrylonitrile, du méthacrylate de méthyle ou encore par des mélanges de ces monomères, et comme polymère thermoplastique B, on met en oeuvre un copolymère de styrène-acrylonitrile, du polystyrène, du polyméthacrylate de méthyle, du chlorure de polyvinyle ou encore des mélanges de ces polymères.

10. Procédé selon les revendications 1 à 9, caractérisé en ce que, comme composant élastomère A, on met en oeuvre un caoutchouc greffé à base de polybutadiène et/ou de polyacrylate d'alkyle comme phase de base et d'un copolymère de styrène et d'acrylonitrile comme phase de greffage, et comme polymère thermoplastique B, un copolymère de styrène-acrylonitrile.

11. Procédé selon les revendications 1 à 10, caractérisé en ce que, comme composant élastomère A, on met en oeuvre un caoutchouc greffé de composition biphasique ou polyphasique, qui est constitué essentiellement par du polyacrylate d'alkyle et par un copolymère de styrène et d'acrylonitrile, et comme polymère thermoplastique B, un copolymère de styrène-acrylonitrile.

12. Procédé selon les revendications 1 à 11, caractérisé en ce que le caoutchouc greffé possède un diamètre de 0,05 à 20 µm.
